# EUROPÄISCHE PATENTSCHRIFT

(11) **EP 2 744 988 B1**
(45) Veröffentlichungstag und Bekanntmachung des Hinweises auf die Patenterteilung: **30.12.2015**
(21) Anmeldenummer: 12748038.2
(22) Anmeldetag: 16.08.2012
(51) Int. Cl.: F01L 1/047

(54) **NOCKENWELLE, INSBESONDERE FÜR KRAFTFAHRZEUGMOTOREN**
CAMSHAFT, ESPECIALLY FOR MOTOR VEHICLE ENGINES
ARBRE À CAMES, EN PARTICULIER POUR MOTEURS DE VÉHICULES À MOTEUR

(30) Priorität: 18.08.2011 DE 102011052819
(43) Veröffentlichungstag der Anmeldung: 25.06.2014
(73) Patentinhaber: Thyssenkrupp Presta Teccenter Ag, 9492 Eschen (LI)
(72) Erfinder: KUNZ, Michael, 08132 Mülsen (DE); MANN, Bernd, 09405 Zschopau (DE); MELZER, Markus, 09235 Burkhardtsdorf (DE); MEUSEL, Jürgen, 09573 Dittmannsdorf (DE)
(74) Vertreter: Lorenz, Bernd Ingo Thaddeus
(86) Internationale Anmeldenummer: PCT/EP2012/066031
(87) Internationale Veröffentlichungsnummer: WO 2013/024140

(56) Entgegenhaltungen:
- WO-A1-2011/089809
- DE-A1-102004 054 301
- DE-A1-102007 017 514
- JP-A- 2010 196 488
- US-A1- 2008 196 681

## Beschreibung

Die Erfindung betrifft eine Nockenwelle, insbesondere für Kraftfahrzeugmotoren gemäß dem Oberbegriff des Patentanspruchs 1. Eine gattungsgemäße Ausgestaltung einer Nockenwelle ist aus der DE 10 2004 054 301 A1 bekannt. Die Innenwelle ist länger als die Außenwelle, so dass ein einfaches ringförmiges Stützelement mit einer Stufe von außen auf die Innenwelle und die Außenwelle aufgesetzt werden kann.

Durch eine Verstellung der ersten Nocken gegenüber den zweiten Nocken ist eine variable Steuerung der Ventile eines Kraftfahrzeugmotors möglich. So kann beispielsweise last- und drehzahlabhängig das Verhältnis der Einlasszeit zur Auslasszeit verändert werden, wenn die Einlassventile einerseits und Auslassventile andererseits mit den unterschiedlichen Gruppen von gegeneinander verstellbaren Nocken betätigt werden.

Um eine präzise Positionierung der Nocken sowie gleichzeitig eine leichte Verstellbarkeit der Innenwelle zu der Außenwelle zu ermöglichen, müssen die beiden Wellen in geeigneter Weise verdrehbar zueinander gelagert sein. So ist bei einer gattungsgemäßen Nockenwelle mit den eingangs beschriebenen Merkmalen gemäß der DE 39 43 426 C1 bekannt, an den Enden der ineinander liegenden Wellenelemente Lagerhülsen zur Lagerung vorzusehen. Dabei ergibt sich der Nachteil, dass die Lagerhülsen mit einer sehr hohen Passgenauigkeit angeordnet werden müssen, um einerseits ein Spiel zu vermeiden und andererseits eine leichte Drehbarkeit zu gewährleisten. Der Innendurchmesser der Außenwelle sowie der Außendurchmesser der Innenwelle müssen genau gefertigt werden, wobei gerade die Bearbeitung der innen liegenden Fläche der Außenwelle nur mit einem erhöhten Bearbeitungsaufwand möglich ist. Ein ähnliches Lagerungskonzept ist aus der EP 1 963 625 B1 bekannt, wobei ein endseitiges Sicherungselement, welches an die Innenwelle angeschlossen ist, sich in radialer Richtung, einer Innenumfangsfläche der Außenwelle abstützt.

Der Erfindung liegt die Aufgabe zugrunde, eine verstellbare Nockenwelle anzugeben, die mit einem geringeren Aufwand herzustellen ist und dabei einen geringen Bauraum erfordert.

Gegenstand der Erfindung und Lösung der Aufgabe ist eine Nockenwelle gemäß Patentanspruch 1.

Erfindungsgemäß erfolgt die radiale Abstützung von Innenwelle und Außenwelle unter Einbeziehung einer Außenumfangsfläche der Außenwelle, welche bei der Herstellung vergleichsweise einfach und kostengünstig bearbeitet werden kann.

Erfindungsgemäß übergreift das Stützelement einen Abschnitt des Außenrohrs, so dass ein zwischen Innenwelle und Außenwelle gebildeter Ringspalt dort nach Art eines Labyrinthes nach außen abgedichtet wird. Wenn in diesem Zusammenhang zu Schmierzwecken Öl in den Ringspalt zwischen der Innenwelle und der Außenwelle geleitet wird, kann das Stützelement auch dazu beitragen, ein unkontrolliertes Abfließen des Öls aus dem Ringspalt heraus zu vermeiden.

Erfindungsgemäß ist das Stützelement als separates Teil gefertigt und an einem Ende der Innenwelle befestigt. Dabei sind stoffschlüssige Verbindungen wie Schweißen, Löten und Kleben sowie kraftschlüssige Verbindungen wie Schrumpfen, Verschrauben sowie die Erzeugung eines Quer-/Längsverbandes geeignet. Grundsätzlich können auch Kombinationen der beschriebenen stoffschlüssigen und kraftschlüssigen Verbindungsarten vorgesehen sein.

Um das Stützelement auf einfache Weise an einer vorgegebenen Position der Innenwelle zu befestigen, kann in axialer Richtung gesehen auch eine formschlüssige Abstützung vorgesehen sein. So kann die Innenwelle zur Befestigung des Stützelementes beispielsweise einen Absatz in Form einer Durchmesserverringerung aufweisen, wobei dann ein Befestigungsabschnitt des Stützelementes auf diesen Absatz aufgesetzt ist. Selbstverständlich sind auch andere formschlüssige Konturen denkbar, wobei beispielsweise ein zylinderförmiger Befestigungsabschnitt des Stützelementes in eine hülsenförmige Aufnahme der Innenwelle ähnlich einer Schraube eingreifen kann.

Gemäß einer bevorzugten Weiterbildung der Erfindung ist das Stützelement auch gleichzeitig ein Funktionsbauteil der Nockenwelle. Das Stützelement kann beispielsweise bei einer geeigneten konstruktiven Ausgestaltung auch als Sensorrad oder Lagerelement eines Wälzlagers genutzt werden, an der die gesamte Nockenwelle drehbar gegenüber dem Zylinderkopf abgestützt ist. Wenn das Stützelement gleichzeitig auch Funktionsbauteil der Nockenwelle ist, weist dieses üblicherweise an seinem Außenumfang Funktionsflächen und/oder Funktionskonturen auf. Insbesondere wenn auf das Stützelement als Funktionsbauteil erhebliche Drehmomente ausgeübt werden, kann zwischen dem Stützelement und der Innenwelle auch eine formschlüssige Verbindung vorgesehen sein, welche die Drehmomentübertragung bei einer Drehung ermöglicht bzw. das übertragbare Drehmoment erhöht.

Für die weitere Ausgestaltung des Stützelementes ergeben sich im Rahmen der Erfindung verschiedene Möglichkeiten. So kann das Stützelement beispielsweise nach Art einer Kappe auf die zugeordneten Enden von Innenwelle und Außenwelle aufgesetzt sein. Erfindungsgemäß erstreckt sich dabei ein Befestigungsabschnitt des Stützelementes innerhalb der Außenwelle, wodurch insgesamt ein geringer Bauraum erreicht werden kann.

Das Stützelement kann aus Keramik, Kunststoff, Metall, Verbundwerkstoff oder einer Kombination dieser Materialien bestehen. In diesem Zusammenhang kommen sämtliche Arten von Verbundwerkstoffen, also insbesondere Teilchenverbundwerkstoffe, Faserverbundwerkstoffe und Schichtverbundwerkstoffe in Betracht. Bei der Auswahl des Materials für das Stützelement muss lediglich berücksichtigt werden, dass dieses den Betriebsstoffen, also beispielsweise Ölen und Hydraulikflüssigkeiten, sowie den bei dem Betrieb auftretenden Temperaturen standhalten kann und eine ausreichende Stabilität aufweist.

Da das Stützelement als separates Teil gefertigt wird, ist es auch leichter bei einem solchen kleineren Teil genaue Maßvorgaben einzuhalten und/oder eine präzise Formbearbeitung sowie Oberflächenvergütung durchzuführen.

Die Außenmantelfläche der Außenwelle und/oder die nach innen gewandte Fläche des Stützelementes, die gemeinsam ein Radiallager bilden, können mit einer Oberflächenvergütung versehen sein. Als Oberflächenvergütung kommt beispielsweise ein Feinschleifen, ein Härten, die Aufbringung einer Verschleißschutzbeschichtung oder dergleichen in Betracht. Grundsätzlich ist es auch möglich, das Außenrohr zur Erzeugung einer präzisen Außenmantelfläche mit einem zusätzlichen Ring aus hochwertigem Material zu versehen, wobei dann dieser Ring als Außenmantelfläche der Außenwelle einen Teil des Radiallagers bildet. Ein nachträglich, beispielsweise durch Aufschrumpfen, befestigter Ring kann ohne Weiteres auf Maß gebracht oder anderweitig bearbeitet werden. Gemäß einem weiteren Aspekt der vorliegenden Erfindung kann die Außenwelle im Bereich des Stützelementes Längsschlitze aufweisen, wobei zwischen den Längsschlitzen gebildete Zungen der Außenwelle sich durch Öffnungen des Stützelementes hindurch erstrecken. Im Rahmen einer solchen Ausgestaltung müssen die Öffnungen in dem Stützelement so groß sein, dass in Umfangsrichtung ein Spiel verbleibt, welches ein Verdrehen von Innenwelle zu Außenwelle ermöglicht. Im Rahmen einer solchen Ausgestaltung können die ein Gleitlager bildenden, zusammenwirkenden Flächen von Stützelement und Außenwelle an den Zungen und/oder an dem an die Zungen anschließenden, in Umfangsrichtung geschlossenen Bereich der Außenwelle vorgesehen sein.

Die Befestigung der zweiten Nocken mit der Innenwelle kann in an sich bekannter Weise mit Stiften, Schrauben oder anderen geeigneten Verbindungselementen erfolgen. Diese Verbindungselemente sind durch Langlöcher der Außenwelle geführt, um den zum Verdrehen von Innenwelle und Außenwelle vorgesehenen Verstellweg bereitzustellen.

Gegenstand der Erfindung ist auch ein Verfahren zur Herstellung der beschriebenen Nockenwelle. Hinsichtlich der Reihenfolge ergeben sich unterschiedliche Gestaltungsmöglichkeiten, wobei gemäß einer ersten Ausgestaltung des Verfahrens das als separates Teil gefertigte Stützelement an der Innenwelle befestigt wird, wobei dann die Innenwelle in die Außenwelle eingeschoben wird und wobei nachfolgend die zweiten Nocken durch Öffnungen der Außenwelle mit der Innenwelle verbunden werden. Als Alternative kann auch zunächst die Innenwelle in die Außenwelle eingeschoben werden, wobei dann die zweiten Nocken durch Öffnungen der Außenwelle mit der Innenwelle verbunden werden und wobei nachfolgend das Stützelement an der Innenwelle befestigt wird. Wird das Stützelement erst nach dem Verbinden der zweiten Nocken mit der Innenwelle und dem Zentrieren der Innenwelle befestigt, kann man die Gefahr eines Verkanten oder Klemmen des Stützelementes auf der Außenwelle verringern.

Im Rahmen des Herstellungsverfahrens kann die einen Teil des Radiallagers bildende Außenumfangsfläche der Außenwelle vor der Anordnung der Innenwelle auf einfache Weise bearbeitet werden. Bevor die Innenwelle und die Außenwelle miteinander verbunden werden, müssen auch die ersten und die zweiten Nocken angeordnet und befestigt bzw. vorpositioniert werden. Dazu werden zweckmäßigerweise sämtliche Nocken auf das Außenrohr aufgeschoben, bevor die ersten Nocken an vorgegebenen axialen Positionen und in einer vorgegebenen Winkelstellung mit dem Außenrohr verbunden werden, wobei die zweiten Nocken noch unfixiert bleiben. Wenn gemäß einer alternativen Ausgestaltung die ersten Nocken, beispielsweise durch Innenhochdruckumformung, direkt aus dem Material des Außenrohres geformt werden, sind die zweiten Nocken zuvor an den entsprechenden Stellen, also beispielsweise zwischen zwei ersten Nocken, anzuordnen. An den Wellenenden liegende zweite Nocken können auch noch nachträglich aufgeschoben werden.

Wie bereits zu Beginn beschrieben, kann das Stützelement auch dazu beitragen einen unkontrollierten Austritt von Öl zu vermeiden. Die Beaufschlagung des zwischen Innenwelle und Außenwelle gebildeten Spaltes mit Öl ist zweckmäßig, um dauerhaft eine leichte Beweglichkeit der Innenwelle gegenüber der Außenwelle sicherzustellen.

Die Erfindung wird im Folgenden anhand einer lediglich ein Ausführungsbeispiel darstellenden Zeichnung erläutert. Es zeigen:
- **Fig. 1a**: einen Längsschnitt durch den Endbereich einer Nockenwelle,
- **Fig. 1b**: die Anordnung gemäß der Fig. 1a in einer perspektivischen Ansicht,
- **Fig. 2**: den Endbereich einer Nockenwelle bei einer alternativen, nicht von der Erfindung umfassten Ausgestaltung,
- **Fig. 3**: eine weitere alternative, erfindungsgemäße Ausgestaltung in einer perspektivischen Ansicht,
- **Fig. 4**: die Anordnung gemäß der Fig. 3 in einer Draufsicht,
- **Fig. 5a**: einen Längsschnitt gemäß der Linie A-A der Fig. 4,
- **Fig. 5b**: einen Längsschnitt entlang der Linie B-B der Fig. 4,
- **Fig. 6**: die Anordnung gemäß der Fig. 5b mit einem zusätzlichen Lagerelement eines Wälzlagerrings an der Außenwelle.

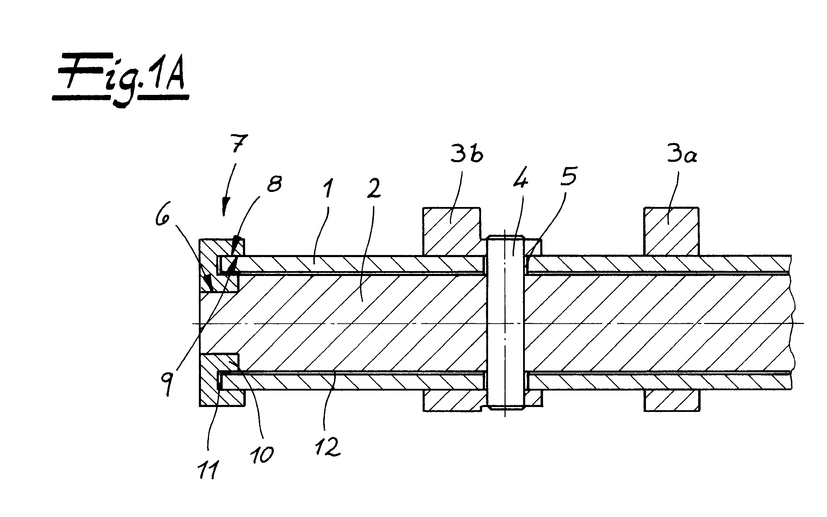

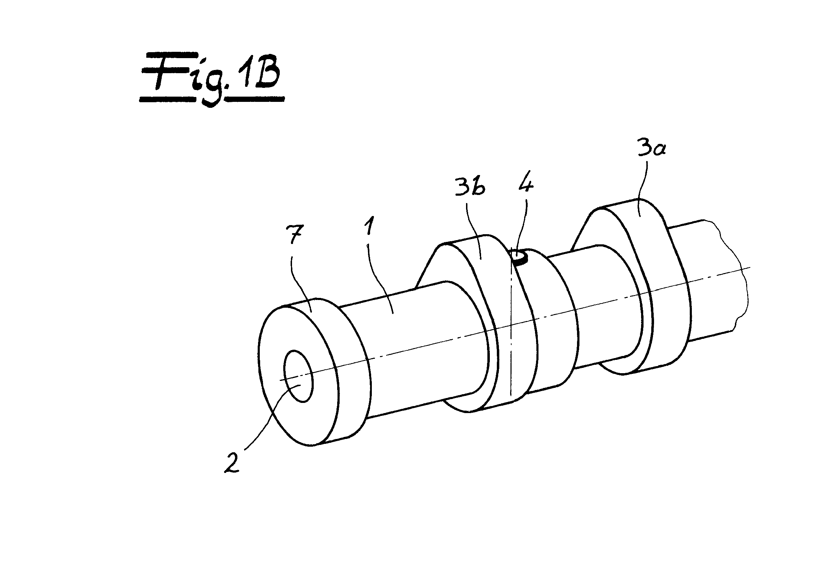

Die Fig. 1a und 1b zeigen in einem Längsschnitt bzw. in einer perspektivischen Ansicht einen Endbereich einer Nockenwelle, insbesondere für Kraftfahrzeugmotoren, mit einer hohlen Außenwelle 1 und einer koaxial in der Außenwelle 1 angeordneten und gegenüber der Außenwelle 1 verdrehbar gelagerten Innenwelle 2. An der Außenwelle 1 sind drehfest angeordnete erste Nocken 3a vorgesehen. Zweite Nocken 3b sind gegenüber der Außenwelle 1 drehbar angeordnet und mit Verbindungselementen 4, im Ausführungsbeispiel mit Stiften, drehfest mit der Innenwelle 2 verbunden. Um eine Drehung von Außenwelle 1 zu Innenwelle 2 zu ermöglichen, weist die Außenwelle 1 im Bereich der Verbindungselemente 4 Langlöcher 5 auf, die sich in Umfangsrichtung erstrecken.

Erfindungsgemäß ist an einem Endbereich der Innenwelle 2 ein über eine Verbindungsfläche 6 drehfest angeschlossenes Stützelement 7 vorgesehen, welches in Radialrichtung über die Außenwelle 1 vorsteht, wobei eine Außenumfangsfläche 8 der Außenwelle 1 mit einer zugeordneten, nach innen gewandten Fläche 9 des Stützelementes 7 ein Radiallager bildet.

Der Fig. 1a ist zu entnehmen, dass das Stützelement 7 sich mit einem Befestigungsabschnitt 10 in die Außenwelle 1 hinein erstreckt, wobei eine Stirnfläche der Außenwelle 1 in einer umlaufenden Nut 11 des Stützelementes 7 aufgenommen ist. Des Weiteren ist aus der Fig. 1a ersichtlich, dass zwischen der Innenwelle 2 und der Außenwelle 1 sowie zwischen dem Befestigungsabschnitt 10 des Stützelementes 7 und der Außenwelle 1 ein radialer Spalt 12 verbleibt. Darüber hinaus ist auch ein Spalt zwischen der Stirnfläche der Außenwelle 1 und der Nut 11 des Stützelementes 7 vorgesehen. Eine gleitende Lagerung ist dagegen an der Außenumfangsfläche 8 der Außenwelle 1 sowie der zugeordneten Fläche 9 des Stützelementes 7 vorgesehen. Diese als Gleitlager zusammenwirkenden Flächen können mit einer speziellen Oberflächenvergütung, beispielsweise einer Finishing-Behandlung, einer Härtung oder einer Beschichtung versehen sein. Grundsätzlich wäre es auch denkbar einen Ring aus einem speziell angepassten Material vorzusehen, um die Außenumfangsfläche 8 der Außenwelle 1 an diesem Ring zu bilden.

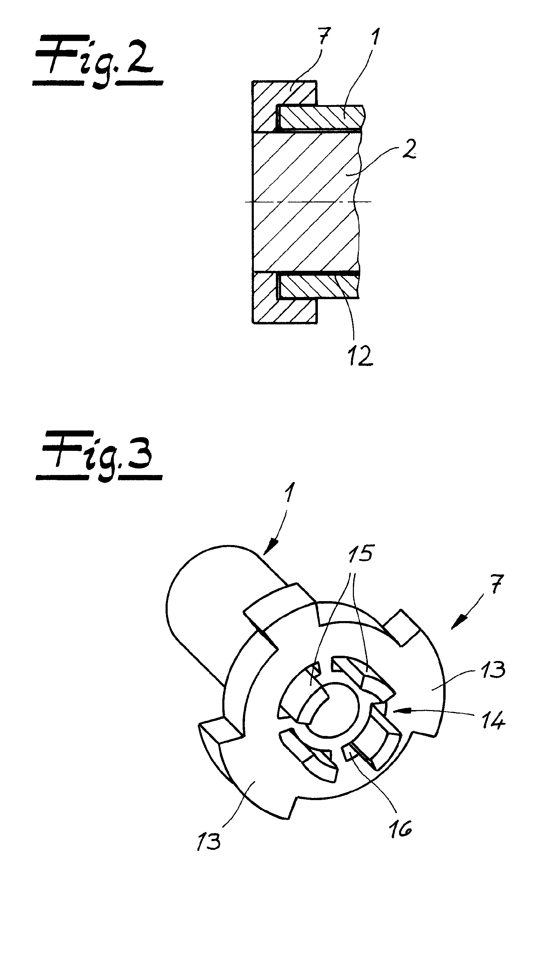

Die Fig. 2 zeigt eine Variante der vorliegenden Erfindung, wobei das Stützelement 7 sich nicht mit einem Befestigungsabschnitt 10 in die Außenwelle hinein erstreckt, sondern an einem Überstand der ansonsten kreiszylindrischen Innenwelle 2 befestigt ist.

In der Fig. 3 ist exemplarisch dargestellt, dass das Stützelement 7 auch ein Funktionselement der Nockenwelle sein kann. In dem dargestellten Ausführungsbeispiel wird das Stützelement 7 auch als Sensorrad genutzt, wozu an dem Außenumfang des Stützelementes 7 Funktionskonturen in Form von Zähnen 13 vorgesehen sind. Bei der dargestellten Ausgestaltung erstreckt sich die Außenwelle 1 in axialer Richtung über die Innenwelle 2 hinaus. Die Außenwelle 1 weist im Bereich des Stützelementes 7 Längsschlitze 14 auf, wobei zwischen den Längsschlitzen 14 Zungen 15 der Außenwelle 1 gebildet sind, die sich durch Öffnungen 16 des Stützelementes 7 erstrecken.

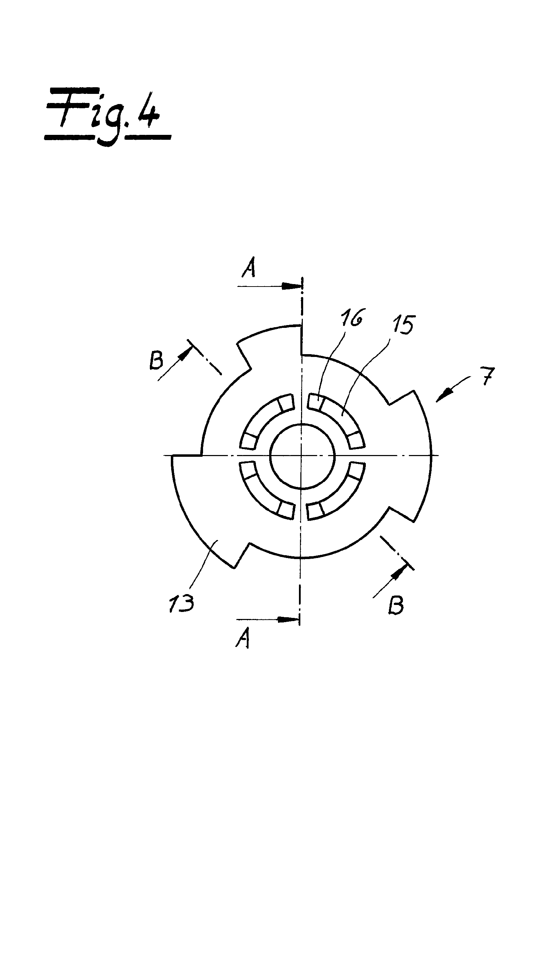

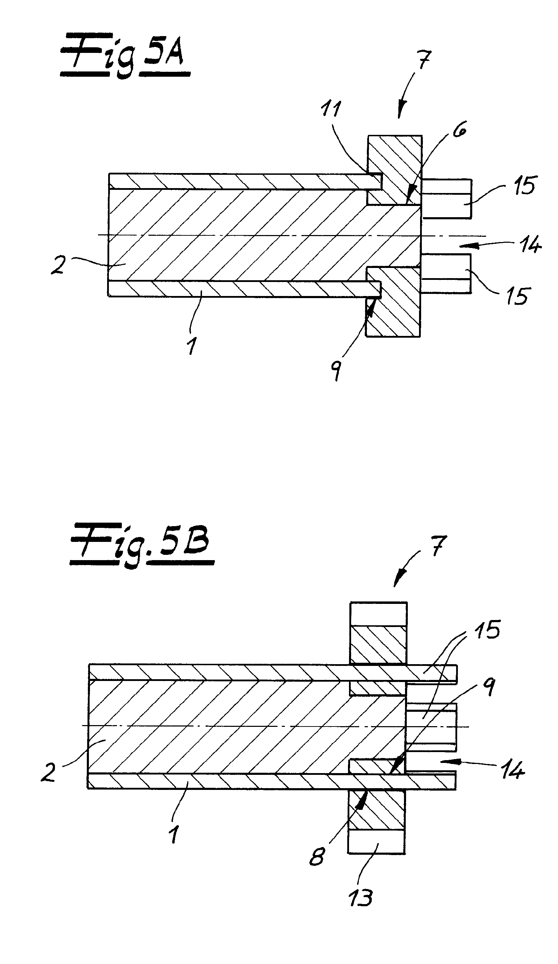

Die Fig. 5a und 5b zeigen einen Schnitt entlang der Linie A-A bzw. der Linie B-B der Fig. 4. Dabei ist zu erkennen, dass das Stützelement 7 an einer Verbindungsfläche 6 mit der Innenwelle 2 verbunden ist. Im Bereich der Nut 11 liegt die einen Teil des Gleitlagers bildende Fläche 9 des Stützelementes 7 nur über einen in axialer Richtung gesehen vergleichsweisen kurzen Bereich an der zugeordneten Mantelfläche der Außenwelle 1 an (Fig. 5a). Im Bereich der Öffnungen 16 (Fig. 5b) ist dagegen eine zuverlässige Gleitlagerung zwischen der entsprechenden Fläche 9 des Stützelementes 7 und der zugeordneten Außenumfangsfläche 8 der Außenwelle 1 vorgesehen.

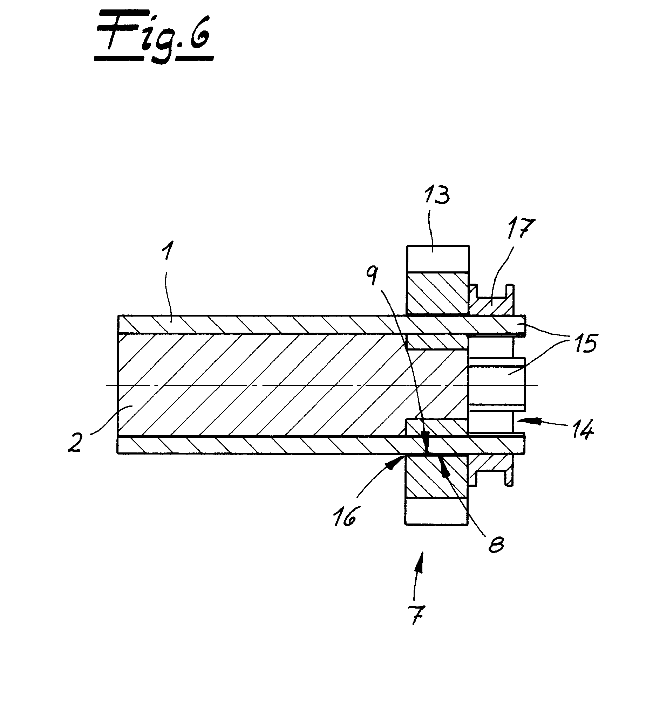

Fig. 6 zeigt eine Ausgestaltung, bei der bei einer Anordnung gemäß der Fig. 3, 4, 5a und 5b seitlich des Stützelementes 7 ein zusätzlicher Ring 17 axial fest auf der Außenwelle 1 angeordnet ist und einen Teil eines Lagers der gesamten Nockenwelle bildet.

Mit dem Ring 17 ist es möglich, neben der radialen Lagerung der Innenwelle 2 auch deren axiale Lagerung zu realisieren. So kann sich das Stützelement 7 in axialer Richtung gesehen, an der einen Seite im Bereich der Nut 11 (Fig. 5a) und an der anderen Seite an einer Stirnfläche des Rings 17 abstützten.

## Patentansprüche

1. Nockenwelle, insbesondere für Kraftfahrzeugmotoren,
mit einer hohlen Außenwelle (1) und einer koaxial in der Außenwelle (1) angeordneten und gegenüber der Außenwelle (1) verdrehbar gelagerten Innenwelle (2),
mit ersten an der Außenwelle (1) drehfest angeordneten Nocken (3a) und mit zweiten Nocken (3b), die drehbar auf der Außenwelle (1) angeordnet und an der Innenwelle (2) befestigt sind,
wobei an zumindest einem der Endbereiche der Innenwelle (2) ein Stützelement (7) vorgesehen ist, welches in radialer Richtung über die Außenwelle (1) vorsteht, wobei eine Außenumfangsfläche (8) der Außenwelle (1) mit einer zugeordneten nach innen gewandten Fläche (9) des Stützelementes (7) ein Radiallager der Innenwelle (2) bildet,
**dadurch gekennzeichnet, dass** das Stützelement (7) mit einem Befestigungsabschnitt (10) innerhalb der Außenwelle (1) angeordnet ist.

2. Nockenwelle nach Anspruch 1, **dadurch gekennzeichnet, dass** das Stützelement (7) durch eine formschlüssige und/oder kraftschlüssige und/oder stoffschlüssige Verbindung an einem Ende der Innenwelle (2) befestigt ist.

3. Nockenwelle nach Anspruch 1 oder 2, **dadurch gekennzeichnet, dass** die Innenwelle (2) zur Befestigung des Stützelementes (7) einen Absatz aufweist.

4. Nockenwelle nach einem der Ansprüche 1 bis 3, **dadurch gekennzeichnet, dass** das Stützelement (7) von einem Funktionsbauteil der Nockenwelle gebildet ist.

5. Nockenwelle nach einem der Ansprüche 1 bis 4, **dadurch gekennzeichnet, dass** eine Stirnfläche der Außenwelle (1) in einer umlaufenden Nut (11) des Stützelementes (7) aufgenommen ist.

6. Nockenwelle nach einem der Ansprüche 1 bis 5, **dadurch gekennzeichnet, dass** die Außenmantelfläche (8) der Außenwelle (1) und/oder die nach innen gewandte Fläche (9) des Stützelementes (7), die gemeinsam ein Radiallager bilden, mit einer Oberflächenvergütung versehen sind.

7. Nockenwelle nach einem der Ansprüche 1 bis 6, **dadurch gekennzeichnet, dass** die Außenwelle (1) im Bereich des Stützelementes (7) Längsschlitze (14) aufweist, wobei zwischen den Längsschlitzen (14) gebildete Zungen (15) der Außenwelle (1) sich durch Öffnungen (16) des Stützelementes (7) hindurch erstrecken.

8. Verfahren zur Herstellung einer Nockenwelle nach einem der Ansprüche 1 bis 7,
wobei das Stützelement (7) an der Innenwelle (2) befestigt wird,
wobei dann die Innenwelle (2) in die Außenwelle (1) eingeschoben wird und
wobei nachfolgend die zweiten Nocken (3b) durch Öffnungen der Außenwelle (1) mit der Innenwelle (2) verbunden werden.

9. Verfahren zur Herstellung einer Nockenwelle nach einem der Ansprüche 1 bis 7,
wobei die Innenwelle (2) in die Außenwelle (1) eingeschoben wird,
wobei dann die zweiten Nocken (3b) durch Öffnungen der Außenwelle (1) mit der Innenwelle (2) verbunden werden und
wobei nachfolgend das Stützelement (7) an der Innenwelle (2) befestigt wird.

## Claims

1. A camshaft, in particular for motor vehicle engines,
having a hollow outer shaft (1) and an inner shaft (2), which is arranged coaxially in the outer shaft (1) and is mounted such that it can rotate relative to the outer shaft (1),
having first cams (3a), which are arranged in a rotationally fixed manner on the outer shaft (1), and having second cams (3b), which are arranged rotatably on the outer shaft (1) and are fastened to the inner shaft (2),
a supporting element (7) being provided on at least one of the end regions of the inner shaft (2), said supporting element projecting beyond the outer shaft (1) in the radial direction, an outer circumferential face (8) of the outer shaft (1) forming a radial bearing of the inner shaft (2) together with an associated inwardly facing face (9) of the supporting element (7), **characterised in that** the supporting element (7) is arranged with a fastening section (10) inside the outer shaft (1).

2. The camshaft according to claim 1, **characterised in that** the supporting element (7) is fastened to one end of the inner shaft (2) by a form-fitting and/or frictional and/or integral connection.

3. The camshaft according to claim 1 or 2, **characterised in that** the inner shaft (2) has a shoulder for fastening the supporting element (7).

4. The camshaft according to any one of claims 1 to 3, **characterised in that** the supporting element (7) is formed by a functional component of the camshaft.

5. The camshaft according to any one of claims 1 to 4, **characterised in that** an end face of the outer shaft (1) is accommodated in a circumferential groove (11) in the supporting element (7).

6. The camshaft according to any one of claims 1 to 5, **characterised in that** the outer lateral face (8) of the outer shaft (1) and/or the inwardly facing face (9) of the supporting element (7), which together form a radial bearing, are provided with a surface finish.

7. The camshaft according to any one of claims 1 to 6, **characterised in that** the outer shaft (1) has longitudinal slots (14) in the region of the supporting element (7), wherein tongues (15) of the outer shaft (1) formed between the longitudinal slots (14) extend through openings (16) in the supporting element (7).

8. A method for the production of a camshaft according to any one of claims 1 to 7,
wherein the supporting element (7) is fastened to the inner shaft (2),
wherein the inner shaft (2) is then inserted into the outer shaft (1), and
wherein the second cams (3b) are then connected to the inner shaft (2) through openings in the outer shaft (1).

9. A method for the production of a camshaft according to any one of claims 1 to 7,
wherein the inner shaft (2) is inserted into the outer shaft (1),
wherein the second cams (3b) are then connected to the inner shaft (2) through openings in the outer shaft (1), and
wherein the supporting element (7) is then fastened to the inner shaft (2).

## Revendications

1. Arbre à cames, en particulier pour des moteurs de véhicules automobiles,
avec un arbre extérieur creux (1) et un arbre intérieur (2) monté de façon à pouvoir tourner par rapport à l'arbre extérieur (1) et agencé coaxialement dans l'arbre extérieur (1),
avec des premières cames (3a) agencées de façon solidaire en rotation sur l'arbre extérieur (1), et avec des deuxièmes cames (3b) agencées de façon solidaire en rotation sur l'arbre extérieur (1) et fixées à l'arbre intérieur (2),
dans lequel au moins un élément d'appui (7) est prévu dans une région terminale de l'arbre intérieur (2), lequel fait saillie au-delà de l'arbre extérieur (1) dans une direction radiale, une surface périphérique extérieure (8) de l'arbre extérieur (1) formant un palier radial de l'arbre intérieur (2) avec une surface (9) de l'élément d'appui (7) correspondante tournée vers l'intérieur, **caractérisé en ce que** l'élément d'appui (7) est agencé avec une section de fixation (10) à l'intérieur de l'arbre extérieur (1).

2. Arbre à cames selon la revendication 1, **caractérisé en ce que** l'élément d'appui (7) est fixé à une extrémité de l'arbre intérieur (2) à l'aide d'un assemblage par complémentarité de forme et/ou par serrage et/ou par adhérence de matière.

3. Arbre à cames selon la revendication 1 ou 2, **caractérisé en ce que** l'arbre intérieur (2) présente un gradin pour la fixation de l'élément d'appui (7).

4. Arbre à cames selon l'une des revendications 1 à 3, **caractérisé en ce que** l'élément d'appui (7) est formé par un composant fonctionnel de l'arbre à cames.

5. Arbre à cames selon l'une des revendications 1 à 4, **caractérisé en ce qu'**une surface frontale de l'arbre extérieur (1) est admise dans une rainure périphérique (11) de l'élément d'appui (7).

6. Arbre à cames selon l'une des revendications 1 à 5, **caractérisé en ce que** la surface d'enveloppe extérieure (8) de l'arbre extérieur (1) et/ou la surface (9) de l'élément d'appui (7) tournée vers l'intérieur, formant ensemble le palier radial, sont pourvues d'un revêtement de surface.

7. Arbre à cames selon l'une des revendications 1 à 6, **caractérisé en ce que** l'arbre extérieur (1) présente des fentes longitudinales (14) dans la région de l'élément d'appui (7), des langues (15) de l'arbre extérieur (1) formées entre les fentes longitudinales (14) s'étendant à travers des ouvertures (16) de l'élément d'appui (7).

8. Procédé pour la réalisation d'un arbre à cames selon l'une des revendications 1 à 7,
dans lequel l'élément d'appui (7) est fixé sur l'arbre intérieur (2),
dans lequel l'arbre intérieur (2) est ensuite inséré dans l'arbre extérieur (1), et
dans lequel les deuxièmes cames (3b) sont ensuite reliées à l'arbre intérieur (2) à travers des ouvertures de l'arbre extérieur (1).

9. Procédé pour la réalisation d'un arbre à cames selon l'une des revendications 1 à 7,
dans lequel l'arbre intérieur (2) est inséré dans l'arbre extérieur (1),
dans lequel les deuxièmes cames (3b) sont ensuite reliées à l'arbre intérieur (2) à travers des ouvertures de l'arbre extérieur (1),
dans lequel l'élément d'appui (7) est ensuite fixé à l'arbre intérieur (2).
